# EUROPÄISCHE PATENTSCHRIFT

(11) **EP 0 470 662 B1**
(45) Veröffentlichungstag und Bekanntmachung des Hinweises auf die Patenterteilung: **03.01.1996**
(21) Anmeldenummer: 91201965.0
(22) Anmeldetag: 29.07.1991
(51) Int. Cl.: C01D 3/14

(54) **Verfahren zum Feinreinigen einer wässrigen Alkalichloridlösung für die Membranelektrolyse**
Process for the fine purification of an aqueous sodium chloride solution for membrane electrolysis
Procédé de purification fine d'une solution aqueuse de chlorure de sodium pour de l'électrolyse à membrane

(30) Priorität: 09.08.1990 DE 4025195
(43) Veröffentlichungstag der Anmeldung: 12.02.1992
(73) Patentinhaber: METALLGESELLSCHAFT Aktiengesellschaft, D-60015 Frankfurt (DE)
(72) Erfinder: Lohrberg, Karl, W-6056 Heusenstamm (DE); Dworak, Rainer, Dr., W-6200 Wiesbaden (DE)

(56) Entgegenhaltungen:
- EP-A- 0 087 934
- CHEMICAL ABSTRACTS, vol. 98, no. 22, 30. Mai 1983, Columbus, Ohio, US; abstract no. 181961F, J.J. WOLFF 'Ion-exchange purification of feed brine for chlor-alkali electrolysis cells ' Seite 137 ;Spalte R ; & OSLO SYMP. 1982: ION EXCH. SOLVENT EXTR., PAP. 1982, IV/62-IV/74
- CHEMICAL ABSTRACTS, vol. 105, no. 18, 3. November 1986, Columbus, Ohio, US; abstract no. 155577D, Seite 150; Spalte L; & JP- A-61091014
- CHEMICAL ABSTRACTS, vol. 98, no. 6, 7. Februar 1983, Columbus, Ohio, US; abstract no. 37057Y, Seite 138; Spalte L; & JP-A-57149823

## Beschreibung

Die Erfindung betrifft ein Verfahren zum Feinreinigen einer Alkalichloridlösung, die in einer Membranelektrolyse verwendet wird, wobei man die Lösung zunächst einer Grobreinigung unterzieht und der anschließenden Feinreinigung eine wäßrige Alkalichloridlösung zuführt, die Calcium- und Magnesiumionen enthält, die Lösung in der Feinreinigung zunächst mit einem pH-Wert von etwa 10 bis 11 durch eine erste, Kationenaustauschgranulat enthaltende Ionenaustauschstufe und anschließend durch mindestens eine weitere, Kationenaustauschgranulat enthaltende Ionenaustauschstufe leitet und aus der Feinreinigung eine Lösung mit einer Summe der Konzentrationen an Ca- und Mg-Ionen von höchstens 0,05 mg/l abzieht.

Ein solches Verfahren ist aus EP-A-0 087 934 bekannt. Einzelheiten der Grob- und Feinreinigung sind auch in DE-C-36 37 939 (dazu korrespondiert US-A-4 839 003) beschrieben. Die Chemical Abstracts 181961F, 155577D und 37057Y betreffen ebenfalls die Feinreinigung von Alkalichloridlösungen für die Elektrolyse, wobei mit Ionenaustauschern gearbeitet wird.

Der Erfindung liegt die Aufgabe zugrunde, die Feinreinigung einer wäßrigen Alkalichloridlösung, die für die Membranelektrolyse bestimmt ist, weiter zu verbessern und nicht nur den Calciumgehalt, sondern insbesondere auch den Magnesiumgehalt wirksam zu verringern. Erfindungsgemäß geschieht dies beim eingangs genannten Verfahren dadurch, daß man aus der ersten Ionenaustauschstufe eine Lösung abzieht, die ungelöste Magnesiumverbindungen einschließlich Magnesiumhydroxid enthält, daß man dieser Lösung Säure zudosiert und die Magnesiumverbindungen löst und daß man die angesäuerte Lösung mit einem pH-Wert von 5 bis 9 in die zweite Ionenaustauschstufe leitet.

In der Membranelektrolyse werden Kationenaustauschermembranen verwendet, die bekanntermaßen einen möglichst niedrigen Calciumionengehalt im Elektrolyten notwendig machen. Es hat sich nun gezeigt, daß auch der Magnesiumionengehalt im Elektrolyten extrem niedrig sein muß, um eine lange Lebensdauer der Membranen zu erreichen. Calcium und Magnesium gelangen vor allem durch Verwenden von Steinsalz als Ausgangsmaterial für die Alkalichloridlösung in den Elektrolyten. Bei den bekannten Feinreinigungsverfahren wird hauptsächlich auf das Einstellen eines niedrigen Calciumgehalts in der gereinigten Lösung geachtet. Dabei wurde bisher übersehen, daß relativ schlecht lösliche Magnesiumverbindungen die Ionenaustauschstufen passieren und so in den Vorratsbehälter für den Elektrolyten gelangen, wo sie sich allmählich lösen. In der Membranelektrolyse führt der so verursachte, erhöhte Gehalt an Magnesiumionen zu Störungen in den Kationenaustauschermembranen.

Beim erfindungsgemäßen Verfahren arbeitet die Feinreinigung mit einer ersten Ionenaustauschstufe, der man die Lösung mit dem üblichen pH-Wert im Bereich von etwa 10 bis 11 zuführt, so daß sie eine hohe Aufnahmekapazität besitzt. Die in der Lösung vorhandenen Ca- und Mg-Ionen werden dadurch weitgehend in der ersten Ionenaustauschstufe adsorbiert. Die aus der ersten Stufe kommende Lösung wird angesäuert, so daß der pH-Wert auf 5 - 9 sinkt. Durch dieses Ansäuern verbessern sich die Lösebedingungen für Magnesiumverbindungen, insbesondere Mg(OH)₂, sehr stark. Dadurch werden der zweiten Ionenaustauschstufe praktisch keine ungelösten Magnesiumverbindungen mehr zugeführt und die Magnesiumionen zusammen mit den restlichen Calciumionen werden in dieser zweiten Stufe bis zu einem sehr geringen Restgehalt aus der Lösung entfernt.

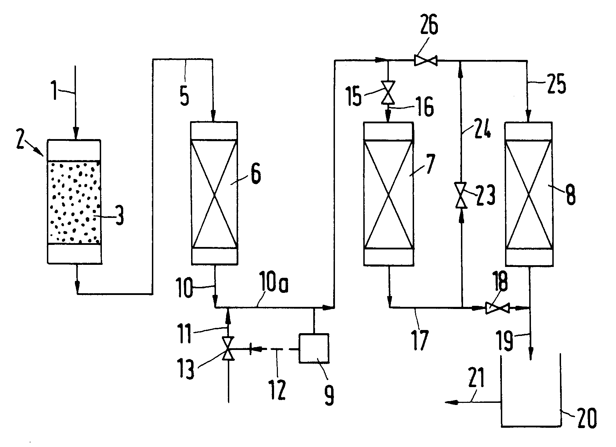

Ausgestaltungsmöglichkeiten des Verfahrens werden mit Hilfe der Zeichnung erläutert.

In der Leitung (1) wird eine wäßrige Natriumchlorid- oder Kaliumchloridlösung herangeführt, die aus einer nicht dargestellten Grobreinigung kommt. Diese Grobreinigung kann z.B. mit einem Eindicker arbeiten. Vorsorglich werden vor der Feinreinigung zunächst in einem Adsorber (2) Feststoffe teilweise entfernt, z.B. mit Hilfe eines Festbettes (3) aus körnigem Koks. Die aus dem Adsorber (2) ablaufende Lösung wird durch die Leitung (5) der Feinreinigung zugeführt, die aus den Ionenaustauschstufen (6), (7) und (8) besteht. Die dritte Stufe (8) muß nicht unbedingt vorhanden sein und kann auch nur wahlweise zugeschaltet werden. In allen Stufen wird Kationenaustauschharz verwendet, wobei man in den verschiedenen Stufen jeweils das gleiche oder auch ein anderes Harz einsetzen kann. Man kann handelsübliches Harz, z.B. Duolite ES 467 oder Lewatit TP 208 von Bayer AG, verwenden. Üblicherweise liegen die Temperaturen in den Ionenaustauschstufen im Bereich von etwa 40 bis 80°C und es wird eine Flüssigkeitsmenge durch jede Stufe geleitet, die pro Stunde etwa dem 10- bis 30-fachen Volumen des Ionenaustauscherbettes entspricht.

Der ersten Ionenaustauschstufe (6) der Feinreinigung gibt man durch die Leitung (5) eine Lösung mit einem pH-Wert von etwa 10 bis 11 auf, um die Adsorptionskapazität in dieser Stufe möglichst voll zu nutzen. Die in der Leitung (10) ablaufende Lösung ist nun schon beinahe frei von Ca- und Mg-Ionen, üblicherweise liegt die Summe des Gehalts an diesen Ionen unterhalb von 0,1 mg/l. Gleichzeitig enthält diese Lösung aber noch Reste an ungelösten Magnesiumverbindungen, insbesondere Mg(OH)₂. Diese Mg-Verbindungen bilden zumeist sehr kleine Kristalle und sind deshalb schwer zu entfernen.

Der Lösung in der Leitung (10a) führt man durch die Leitung (11) Säure, z.B. HCl, zu und verringert dadurch den pH-Wert der Lösung auf 5 bis 9. Eine pH-Wert-Messung (9) stromab von der Säurezugabe überprüft den verringerten pH-Wert und stellt über eine Signalleitung (12) und ein Ventil (13) in der Säureleitung den gewünschten pH-Wert ein.

Die angesäuerte Lösung fließt nun durch das geöffnete Ventil (15) durch die Leitung (16) zur zweiten Ionenaustauschstufe (7), wo die durch das Ansäuern neu gebildeten Magnesiumionen und Calciumionen entfernt werden. Die feingereinigte Lösung verläßt die Stufe (7) durch die Leitung (17) und gelangt durch das geöffnete Ventil (18) und die Leitung (19) zu einem Vorratsbehälter (20), aus dem man die gereinigte Alkalichloridlösung durch die Leitung (21) abzieht und der nicht dargestellten Membranelektrolyse zuführt.

Eine Verfahrensvariante besteht darin, eine dritte Ionenaustauschstufe (8) vorzusehen, die ständig oder im Bedarfsfall benutzt wird. Im Normalbetrieb kann diese Stufe (8) hinter die zweite Ionenaustauschstufe (7) geschaltet sein, wobei man das Ventil (23) in der Leitung (24) öffnet, das Ventil (18) schließt und die Lösung durch die Leitungen (24) und (25) zusätzlich durch die Stufe (8) führt, bevor sie in den Behälter (20) gelangt. Wird die zweite Stufe (7) regeneriert, so kann die dritte Stufe (8) an ihre Stelle treten, wobei man das Ventil (15) schließt und die Lösung durch die Leitung (10), das geöffnete Ventil (26) und durch die Leitung (25) zur Stufe (8) führt.

Während der Zeit, in welcher die beladene erste Ionenaustauschstufe (6) regeneriert wird, ist es nicht notwendig abzuschalten, es reicht vielmehr aus, die Lösung aus der Leitung (5) durch einen nicht dargestellten Bypass direkt in die Leitung (10) überzuführen, anzusäuern und sie die Stufen (7) und (8) nacheinander durchlaufen zu lassen. Alternativ kann während der Regeneration der Stufe (6) natürlich auch eine andere, nicht dargestellte Ionenaustauschsäule zugeschaltet werden.

Zum Regenerieren des Kationenaustauschgranulats der Ionenaustauschstufen (6), (7) und (8) verwendet man z.B. in bekannter Weise eine wäßrige Lösung, die 1 bis 10 Gew.-% HCl enthält.

### Beispiel

In einer der Zeichnung entsprechenden Verfahrensführung werden pro Stunde 40 m³ einer wäßrigen Steinsalzlösung gereinigt. Die Lösung, die in der Leitung (1) herangeführt wird, enthält pro Liter hauptsächlich 305 g NaCl und 0,5 g Na₂CO₃ und daneben 3 mg Ca- und Mg-Ionen sowie 10 mg ungelöste Ca- und Mg-Verbindungen. Die Lösung weist einen pH-Wert von 10,5 und eine Temperatur von 70°C auf. Im Adsorber (2) wird Aktivkoks und in den Ionenaustauschstufen (6), (7) und (8) werden jeweils 2 m³ des Kationenaustauscherharzes Lewatit TP 208 angewandt. Die Stufen (6), (7) und (8) sind in Serie geschaltet. Durch die Leitung (11) gibt man der Lösung pro Stunde 30 kg HCl zu und verringert dadurch den pH-Wert von 10,5 auf 7,5. In den verschiedenen Leitungen werden folgende Werte aus Ca- und Mg-Ionen, Mg-haltigen Feststoffen (Mg-fest) und den pH-Werten gemessen:

| | | | | | |
|---|---|---|---|---|---|
| Leitung | 5 | 10 | 16 | 17,24,25 | 19 |
| Ca²⁺ + Mg²⁺ (mg/l) | 3 | 0,02 | 0,5 | 0,02 | 0,02 |
| Mg-fest (mg/l) | 1,5 | 0,5 | 0 | 0 | 0 |
| pH | 10,5 | 10,5 | 7,5 | 7,5 | 7,5 |

Der Gehalt an Ca-haltigen Feststoffen ist bereits in der Leitung (10) vollständig verschwunden.

## Patentansprüche

1. Verfahren zum Feinreinigen einer wäßrigen Alkalichloridlösung, die in einer Membranelektrolyse verwendet wird, wobei man die Lösung zunächst einer Grobreinigung unterzieht und der anschließenden Feinreinigung eine wäßrige Alkalichloridlösung zuführt, die Calcium- und Magnesiumionen enthält, die Lösung in der Feinreinigung zunächst mit einem pH-Wert von etwa 10 bis 11 durch eine erste, Kationenaustauschgranulat enthaltende Ionenaustauschstufe und anschließend durch mindestens eine weitere, Kationenaustauschgranulat enthaltende Ionenaustauschstufe leitet und aus der Feinreinigung eine Lösung mit einer Summe der Konzentrationen an Ca- und Mg-Ionen von höchstens 0,05 mg/l abzieht, dadurch gekennzeichnet, daß man aus der ersten Ionenaustauschstufe eine Lösung abzieht, die ungelöste Magnesiumverbindungen einschließlich Magnesiumhydroxid enthält, daß man dieser Lösung Saure zudosiert und die Magnesiumverbindungen löst und daß man die angesäuerte Lösung mit einem pH-Wert von 5 bis 9 in die zweite Ionenaustauschstufe leitet.

## Claims

1. Process for fine purification of an aqueous alkali chloride solution which is used in membrane electrolysis, wherein the solution first of all is subjected to coarse purification and an aqueous alkali chloride solution is fed into the subsequent fine purification which solution contains calcium and magnesium ions, the solution in the fine purification stage being passed initially at a pH value of approximately 10 to 11 through a first ion-exchange stage containing cation-exchange granules and then through at least one further ion-exchange stage containing cation-exchange granules, and a solution with a maximum total of concentrations of Ca- and Mg-ions of 0.05 mg/l is extracted from the fine purification stage, characterised in that a solution is extracted from the first ion-exchange stage which contains undissolved magnesium compounds including magnesium hydroxide, that this solution has acid added to it and the magnesium compounds are dissolved and that the acidulated solution is passed at a pH value of 5 to 9 into the second ion-exchange stage.

## Revendications

1. Procédé de purification fine d'une solution aqueuse de chlorure de métal alcalin qui est utilisée dans une électrolyse à membrane, dans lequel on soumet la solution d'abord à une purification grossière et on achemine à la purification fine ultérieure, une solution aqueuse de chlorure de métal alcalin qui contient des ions calcium et magnésium, on guide la solution dans la purification fine d'abord avec une valeur de pH d'environ 10 à 11 à travers une première étape d'échange dons contenant un granulat d'échange de cations et ensuite, à travers au moins une étape d'échange d'ions supplémentaire contenant un granulat d'échange de cations et on extrait de la purification fine une solution dont la somme des concentrations en ions Ca et Mg s'élève au maximum à 0,05 mg/l, caractérisé en ce qu'on extrait de la première étape d'échange d'ions, une solution qui contient des composés de magnésium non dissous, y compris de l'hydroxyde de magnésium, en ce qu'on procède à l'addition dosée d'acide à cette solution et on dissout les composés de magnésium, et en ce qu'on guide la solution acidifiée avec une valeur de pH de 5 à 9 dans la deuxième étape d'échange d'ions.
